Europäisches Patentamt

(19) European Patent Office    (11) Publication number: **0 059 440**
Office européen des brevets                          **A1**

(12)                    **EUROPEAN PATENT APPLICATION**

(21) Application number: **82101455.2**    (51) Int. Cl.³: **G 03 B 15/04**

(22) Date of filing: **25.02.82**

(30) Priority: **27.02.81 US 238866**        (71) Applicant: **GTE Products Corporation**
                                              **100 West 10th Street**
                                              **Wilmington Delaware(US)**
(43) Date of publication of application:
    **08.09.82 Bulletin 82/36**            (72) Inventor: **Kackenmeister, Carl F.**
                                              **1298 Market Street**
(84) Designated Contracting States:            **Williamsport, PA 17701(US)**
    **BE DE FR GB IT NL**
                                          (74) Representative: **Reinländer & Bernhardt Patentanwälte**
                                              **Orthstrasse 12**
                                              **D-8000 München 60(DE)**

(54) Process for sealing a housing of a multi-lamp photoflash unit, and this unit.

(57) A multi-lamp photoflash unit has a plastic housing member (7) with a back portion having a plurality of cavities (19) formed to receive a reflector unit (13) wherein is disposed a plurality of flashlamps (15) and a light transmitting front portion (11) formed to fold over and enclose the flashlamps and is characterized by the improvement wherein at least one part of one of the front (11) and back (9) portions of the plastic housing is folded over the edge of the other, aligned in parallel with and sealed to the other of the front and back portions to provide a shear-type seal. The multi-lamp photoflash unit is fabricated by a process wherein the front and back layers are contacted, one is folded over, aligned with and sealed to the other by spaced spot seals.

FIG.1

FOLDED EDGE SEAL FOR FLASHLAMP ARRAY

TITLE MODIFIED
see front page

TECHNICAL FIELD

This invention relates to flashlamp arrays and more particularly to a flashlamp array having a plastic housing member with a folded edge seal and a process for effecting the folded seal.

CROSS REFERENCE TO OTHER APPLICATIONS

A concurrently filed application bearing U.S. Serial No. (Attorney's Docket No. D21,929), entitled "Knurled Seal Flashlamp Array" in the names of David R. Broadt and Carl F. Kackenmeister and assigned to the Assignee of the present application relates to multi-lamp photoflash knurled sealing.

BACKGROUND ART

In the manufacture of flashlamp arrays and particularly multi-lamp flashlamp arrays it is a common practice to enclose the array within a plastic cover. This plastic cover serves not only to provide structural integrity but also provides security from injury for the consumer. In both cases, structural integrity and consumer security, mechanical or chemical bonding of the plastic cover is an essential ingredient.

Bonding of flashlamp arrays employing mechanical and chemical techniques such as hot-melt adhesives and glues has been found to be somewhat less than satisfactory in high production operations for numerous reasons. For example, most adhesives and glues tend to be cumbersome to handle at best and chemical bonding in general tends toward the undesired presence of toxic and often flammable conditions. However, such techniques have been and still are utilized with varying degrees of success.

Other bonding techniques include heat sealing of plastic surfaces and ultrasonic sealing of plastic surfaces for example. In a heat sealing process, it is common to position a pair of layers of plastic in contact with one another and to apply heat thereto in an amount sufficient to melt the plastic layers such that they are welded to one another. Unfortunately, heat sealing is often dependent upon heat from high temperature lamps which tend to exhibit life problems, cooling problems and replacement problems. Also, the plastic must be such that it absorbs heat in an amount sufficient to soften the plastic and then cools at a rate which corresponds to a desired rate of production.

On the other hand, ultrasonic bonding is dependent upon the transformation of sonic energy into friction and heat by the mechanical movement of the plastic layers with respect to one another. As a result, the plastic layers must have similar characteristics, a low melting temperature and good contact therebetween because of the limited vibratory movement of the plastic layers.

Importantly, the known multi-lamp photoflash arrays include a pair of flat and smooth plastic surfaces in contact with one another and enclosing the operational components of the array. Thus, heat sealing or ultrasonic bonding is appropriate. However, this type of seal tends to provide a peel-type mode of bonding wherein the seal is subjected to a peel-type stress which is neither flexible nor particularly strong insofar as resistance to pressure is concerned.

SUMMARY OF THE INVENTION

An object of the present invention is to provide an improved multi-lamp photoflash array. Another object of the invention is to enhance the bonding of a plastic housing member of a multi-lamp photoflash array. Still another object of the invention is to provide an improved shear-type stress bonding of a multi-lamp photoflash unit.

These and other and further objects, advantages and capabilities are achieved in one aspect of the invention by a multi-lamp photoflash unit having a plastic housing member with front and back portions wherein a part of one of the front and back portions is folded over the edge of and sealed to the other.

In another aspect of the invention a process for sealing a plastic housing member of a multi-lamp photoflash unit is provided wherein multiple layers of plastic are positioned intermediate a
pair of head members, contacted by the head members and energized
with the sealing process characterized by the improvement wherein
one plastic layer is folded around the edge of the other and the
folded plastic layer is sealed to the other plastic layer.

BRIEF DESCRIPTION OF THE DRAWINGS

Fig. 1 is an exploded view of a multi-lamp photoflash array
illustrating a preferred embodiment of the invention;

Figs. 2, 3, and 4 illustrate a process for fabricating the
bonded housing member of the invention; and

Fig. 5 is an elevational view illustrating the preferred
multi-lamp photoflash unit employing an embodiment of the invention.

BEST MODE FOR CARRYING OUT THE INVENTION

For a better understanding of the present invention, together
with other and further objects, advantages and capabilities thereof,
reference is made to the following disclosure and appended claims in
conjunction with the accompanying drawings.

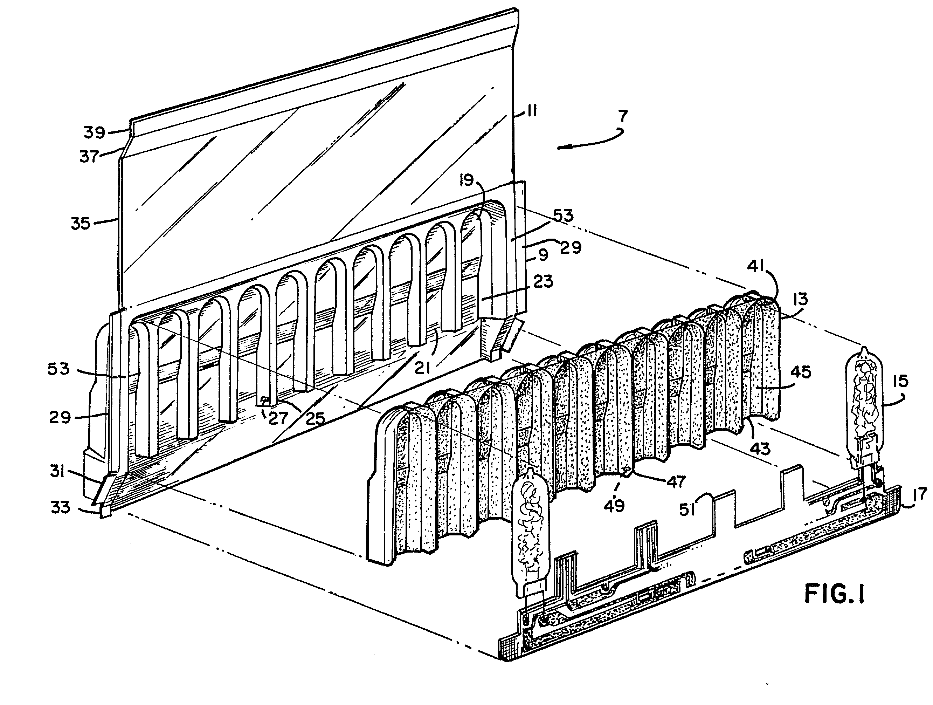

In the drawings, Fig. 1 illustrates a multi-lamp photoflash
unit having a plastic housing member 7 with a back portion 9 and a
front portion 11. A reflector unit 13 is formed for positional
location within the housing member 7 and a multiplicity of
flashlamps 15 are affixed to a printed circuit board 17 and also
located within the housing member 7.

More specifically, the back portion 9 of the housing member 7
includes a plurality of cavities 19 each having an off-set portion
21 and a pair of oppositely disposed sidewalls 23 in a plane
substantially normal to the opening of the cavities 19. The
cavities 19 are spaced from one another by a bridging member 25
wherein is disposed a venting aperture 27. Also, the back portion 9
has extending outwardly therefrom a first tab-like portion 29, a
tapering portion 31 and a second tab-like portion 33.

The front portion 11 of the housing member is of a light
transmitting plastic material foldably connected to the back portion

- 4 -

0059440

9. This front portion 11 includes a first flat portion 35 connected by a tapering portion 37 to a second flat portion 39. This back portion 11 is formed to fold and provide displaced overlapping of said tab-like portion 29, tapering portion 31 and second tab-like portion 33 by said first flat portion 35, tapering portion 37 and second flat portion 39.

The reflector unit 13 has a multiplicity of reflector cavities 41 each having a surface of reflective material and formed to nest within the cavities 19 of the back portion 9 of the housing member 7. These reflector cavities 41 also have an off-set portion 43, a pair of sidewalls 45 in a plane normal to the opening and are spaced from one another by a spacer 47 wherein is provided a vent hole 49 aligned with the aperture 27 of the back portion 9.

A plurality of flashlamps 15 are mechanically and electrically connected to a printed circuit board 17 and disposed within the cavities 41 of the reflector unit 13. Moreover, finger-like members 51 extending outwardly from the printed circuit board 17 are positionally located within the off-set portion 43 of the reflector unit 13. Thereafter, the light-transmitting front portion 11 of the housing member 7 is folded to provide an envelope wherein the flashlamps 15 are contained.

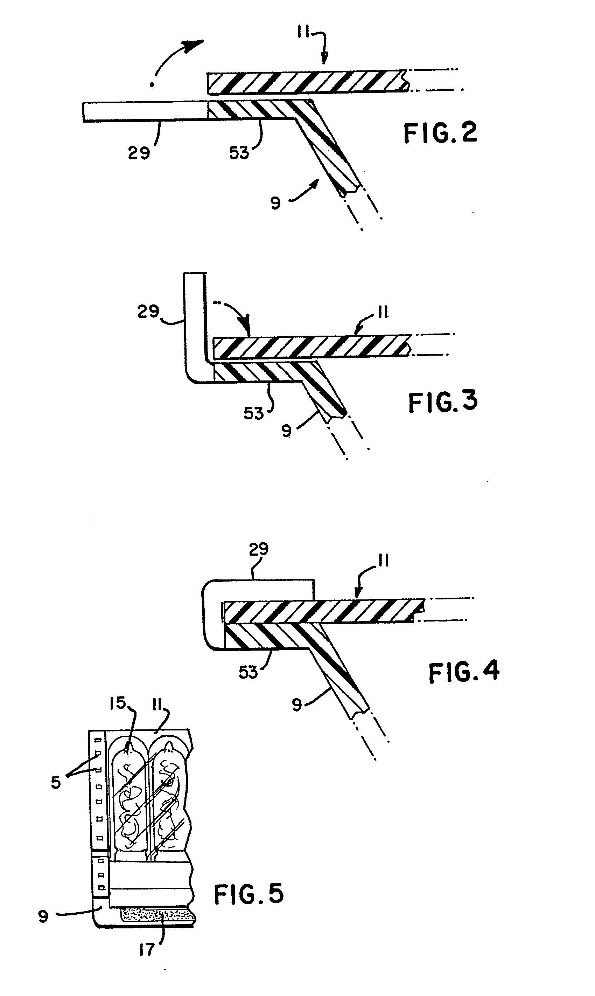

As can be seen in Figs. 2, 3, and 4, the back and front portions 9 and 11 of the housing member 7 are sealed to one another. For example, a first part 53 of the back portion 9 is placed in contact with the front portion 11. A second part 29 of the back portion 9 is folded around the front portion 11, aligned in parallel with and sealed to the front portion 11.

Thus, there is provided a seal wherein the force exerted thereon from the interior of the plastic housing member is a shear force as opposed to prior known peel-like forces. Moreover, it is known that a much stronger seal is provided when the seal is exposed to a shear stress as opposed to a peel stress.

It may be noted that the above-described sealing procedure may be reversed wherein a part of the front portion 11 of the housing member 7 is folded around the back portion 9 of the housing member 7. Also, the back and front portions 9 and 11 may be formed such that portions of either one may be folded over and sealed to the other to provide the above-described shear-type seal.

Alternatively, both the back and front portions 9 and 11 may be simultaneously folded in a substantially U-shaped configuration such that one of the back and front portions 9 and 11 is folded back upon itself and sealed thereto. Again, a shear-type seal is provided whereby the bonding and flexibility of the structure is enhanced.

Additionally, Fig. 5 illustrates the sealed multi-lamp photoflash unit wherein the above-described stress-type seal has been incorporated. As can readily be seen, sealing is in the form of spaced spot seals 57 as opposed to a single continuous seal. It has been determined that a continuous seal is inferior to spaced spot seals due to the undesired formation of a continuous and relatively weakened section of the plastic housing member 7 which occurs with a continuous seal and is not present with spaced spot seals.

While there has been shown and described what is at present considered preferred embodiments of the invention, it will be obvious to those skilled in the art that various changes and modifications may be made therein without departing from the invention as defined by the appended claims.

INDUSTRIAL APPLICABILITY

A seal for a plastic housing member of a multi-lamp photoflash unit has been provided wherein a tab member of one of the front and back portions of the housing member is folded around the edge of the other and sealed to the other by a plurality of spaced spot seals. This type of seal configuration provides a seal wherein the stress exerted thereon is a shear stress as compared with the usual peel-type stress encountered when plastic surfaces are merely bonded to one another.

In addition to the enhanced bonding strengh provided by a seal which is under a shearing stress, it is to be noted that the above-described folded configuration provides an increased degree of flexibility as compared with usual bonding and attains a desired increased capability to resist rupture. As a result, containment of the flashlamps within the housing member is enhanced.

Further, the spaced spot seals, which may be provided by ultrasonic or heat sealing sources for example, are free from the undesired weakness frequently encountered when a continuous seal on a plastic material is utilized. Thus, a multi-lamp photoflash unit has been provided wherein enhanced bonding provides a shear-type seal of improved strength and increased structural flexibility. Moreover, the spot spaced seal is relatively free from development of undesired weakness of the plastic material as is often present in a continuously sealed plastic structure.

WHAT IS CLAIMED

1. In a process for sealing a plastic housing member of a multi-lamp photoflash unit which includes the steps of positioning multiple layers of plastic between a pair of head members, contacting the multiple layers of plastic with the head members and energizing the head members to seal the multiple layers of plastic, the improvement comprising the step of folding one plastic layer around the edge of another plastic layer and aligning the one folded plastic layer parallel to the surface of the other plastic layer and sealing said one folded plastic layer parallel to the surface to said other plastic layer.

2. In the process of Claim 1 wherein sealing of said one folded plastic layer to said other plastic layer is effected by spot sealing one to the other.

3. In the process of Claim 1, the improvement wherein said one folded plastic layer is sealed to said other plastic layer by multiple spaced spot seals.

4. In the process of Claim 1 wherein said plastic housing member includes front and back portions, the improvement wherein one of said front and back portions is folded around the edge of the other and aligned in a plane parallel thereto and said portion folded around the edge of said other portion sealed to said other portion.

5. The improvement of Claim 4 wherein said portion folded around the edge of said other portion and said other portion are sealed by multiple spaced spot seals.

6. The improvement of Claim 4 wherein said multiple spaced spot seals are ultrasonic seals.

7. The improvement of Claim 4 wherein said multiple spaced spot seals are heat seals.

8. In a process for sealing a multi-lamp photoflash unit having a plastic housing member wherein the plastic housing member has a back portion with a plurality of cavities formed to receive a reflector unit having cavities for receiving flashlamps and a light transmitting front portion formed to fold and form an envelope containing said flashlamps and which includes the steps of positioning some of said front and back portions of said housing member intermediate an energizing source, contacting said some of said front and back portions with said energizing source and energizing said some of said front and back portions, the improvement comprising the steps of folding a first portion of one of said front and back portions around the edge of the other of said front and back portions and aligning said first portion in parallel with said other of said front and back portions and sealing said first portion to said other of said front and back portions.

9. In the process of Claim 8, the improvement wherein said sealing of said first portion to said other of said front and back portions is a series of spaced spot seals.

10. In the process of Claim 8, the improvement of Claim 8 wherein multiple portions of one of said front and back portions of said housing member are folded around the edge of the other of said front and back portions and aligned is parallel with and sealed to said other one of said front and back portions.

11. A multi-lamp photoflash unit having a plastic housing member with a back portion having multiple cavities for receiving flashlamps formed therein and a light transmitting front portion formed to fold and enclose said cavities, said unit characterized by the improvement wherein at least one portion of one of said front and back portions of said housing member is folded over the edge of the other, aligned in parallel with and sealed to said other of said front and back portions to form a bond whereby said falshlamps are encapsulated within said housing member.

12. The multi-lamp photoflash unit of Claim 11 wherein said sealing of said portion of one of said front and back portions of said housing member to the other is in the form of spaced spot seals.

13. The multi-lamp photoflash unit of Claim 11 wherein multiple portions of said front and back portions of said housing member are folded over the edge of the other and aligned in parallel with and sealed to the other of said front and back portions of said housing member.

14. The multi-lamp photoflash unit of Claim 11 wherein said sealing of said front and back portions is in the form of spaced ultrasonic spot seals.

- 3 -  0059440

15. A multi-lamp photoflash unit having a plastic housing member with back and front portions and a reflector unit and multiple flashlamps disposed within the housing member and a printed circuit board positioned intermediate the back and front portions, said flashlamps disposed within spaced cavities of said reflector unit nested within spaced cavities of said back portion of said housing member, said multi-lamp photoflash unit characterized by the improvement wherein at least one portion of said front and back portions of said plastic housing member is folded over the edge of the other and aligned in parallel with and sealed to the other of said front and back portions of said plastic housing member.

16. The multi-lamp photoflash unit of Claim 15 wherein multiple portions of said front and back portions of said plastic housing member are folded over the edge of the other and aligned in parallel with and sealed to the other of said front and back portions.

17. The multi-lamp photoflash unit of Claim 15 wherein said seal of said at least one portion of one of said front and back portions of said plastic housing member to the other is in the form of spaced spot seals.

18. The multi-lamp photoflash unit of Claim 17 wherein said spaced spot seals are ultrasonic seals.

19. The multi-lamp photoflash unit of Claim 17 wherein said spaced spot seals are heat seals.

FIG.1

0059440

1/2

FIG.2

29    53    9    11

FIG.3

29    11    53    9

FIG.4

29    11    53    9

FIG.5

15    11    5    9    17

**0059440**

European Patent
Office

**EUROPEAN SEARCH REPORT**

Application number

EP 82 10 1455

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | G 03 B 15/04 |
| A | US - A - 4 238 814 (D.W. BRICKER et al) <br><br> * Column 5, line 35 - column 7, line 14 * | 1,6,11, 14 | |
| A | GB - A - 2 019 033 (GENERAL ELECTRIC COMP.) <br><br> * Page 1, lines 117-127 * | | |

TECHNICAL FIELDS
SEARCHED (Int.Cl. 3)

G 03 B 15/00

CATEGORY OF
CITED DOCUMENTS

X: particularly relevant if
  taken alone
Y: particularly relevant if
  combined with another
  document of the same
  category
A: technological background
O. non-written disclosure
P. intermediate document
T. theory or principle
  underlying the invention
E: earlier patent document,
  but published on, or after
  the filing date
D: document cited in the
  application
L: document cited for other
  reasons

&: member of the same patent
family,
corresponding document

The present search report has been drawn up for all claims

| Place of search | Date of completion of the search | Examiner |
|---|---|---|
| The Hague | 21-04-1982 | PRATSCH |

EPO Form 1503.1 06.78